(19) Europäisches Patentamt
European Patent Office
Office européen des brevets

(11) **EP 3 605 458 A1**

(12) **EUROPEAN PATENT APPLICATION**
published in accordance with Art. 153(4) EPC

(43) Date of publication:
**05.02.2020 Bulletin 2020/06**

(51) Int Cl.:
*G06T 7/00* (2017.01)     *G01B 11/00* (2006.01)

(21) Application number: **18777146.4**

(86) International application number:
**PCT/JP2018/010039**

(22) Date of filing: **14.03.2018**

(87) International publication number:
**WO 2018/180501 (04.10.2018 Gazette 2018/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.03.2017   JP 2017066802**

(71) Applicant: **Equos Research Co., Ltd.
Tokyo 101-0021 (JP)**

(72) Inventor: **KUNO Kazuhiro
Tokyo 101-0021 (JP)**

(74) Representative: **TBK
Bavariaring 4-6
80336 München (DE)**

(54)   **OBJECT DETERMINATION DEVICE AND OBJECT DETERMINATION PROGRAM**

(57)     An object determination device and object determination program are provided which, by combining image recognition results and distance measurement data to determine an object, make it possible to perform said determination with high speed and high accuracy.

[Problem]

In this object determination device (1), an image recognition score calculated from an image acquired by a camera (3) is associated with measured distance values acquired by a ranging sensor (4). The measured distance values are grouped and an object is generated, and the measured distance values and image recognition score of said object are stored in an object table (8c). Then, the object is recognized as a person or as a thing on the basis of a measured distance likelihood ($\beta$), an image recognition likelihood ($\alpha$) and a match ratio ($\gamma$) calculated from the values of the object table (8c). Therefore, the image recognition score of the image acquired from the camera (3) and the measured distance values acquired from the ranging sensor (4) are combined and the object is recognized as a person or as a thing, thus making it possible to perform said recognition processing with high speed and high accuracy.

Fig. 5

# Description

Technical Field

The present invention relates to an object determination device and an object determination program for determining an object by combining image recognition results and distance measurement data.

Background Art

There has been a known technology for determination of an object in consideration of not only a pick-up image of the object but also a distance to the object so that the load of image processing is reduced. An on-board object detection device 100 disclosed in Patent Literature 1 includes the measurement device 1 for measuring a relative distance between the vehicle and the object, and the image pick-up device 2 for picking up the image in front of the vehicle. Based on the distance to the object and the vehicle front image, the image processing region is set in the front image. The image processing is executed to the image in the image processing region to select the processing candidate from the object. Based on the distance to the processing candidate and the front image, the image processing region is determined in the front image. The image processing is executed to the image in the image processing region to determine whether the processing candidate is a preliminarily set solid object. The on-board object detection device 100 allows suppression of detecting the non-solid object mistakenly while lessening the image processing load.

Citation List

Patent Literature

Patent Literature 1: Japanese Unexamined Patent Application Publication No. 2009-276200

Summary of Invention

Technical Problem

In the patent literature 1, data of distance to the object for determining the object will be actually used only when setting the region for image processing. The object is determined by executing the image processing. Such circumstance has hardly solved the problems of heavy image processing load, and the long processing time.

Aiming to solve the above-described problems, it is an object of the present invention to provide an object determination device and an object determination program capable of high-speed and high-accuracy determination of the object by combining the image recognition results and the distance measurement data.

Solution to Problem

For achieving the object, the object determination device according to the present invention includes an image pick-up unit for picking up the image, a distance measurement unit for measuring a distance to an object, an image recognition unit for performing image recognition of the object in the image picked up by the image pick-up unit, an image recognition association unit for associating a result of the image recognition performed by the image recognition unit with distance measurement data measured by the distance measurement unit, a grouping unit for grouping a plurality of distance measurement data under a predetermined condition into a group of a single object, a likelihood calculation unit for calculating a likelihood of the target based on the distance measurement data constituting the single object grouped by the grouping unit, or the result of the image recognition associated with the distance measurement data by the image recognition association unit, a match ratio calculation unit for calculating a match ratio of the target based on the result of the image recognition associated by the image recognition association unit with the distance measurement data constituting the single object grouped by the grouping unit, and a determination unit for determining whether the single object grouped by the grouping unit is the target based on the match ratio calculated by the match ratio calculation unit, and the likelihood calculated by the likelihood calculation unit.

The object determination program according to the present invention allows a computer to execute an image acquisition function for acquiring an image, a distance measurement data acquisition function for acquiring distance measurement data to an object, an image recognition function for performing image recognition of the object in the image acquired by the image acquisition function, an image recognition association function for associating a result of the image recognition performed by the image recognition function with the distance measurement data acquired by the distance measurement data acquisition function, a grouping function for grouping a plurality of distance measurement data under a predetermined condition into a group as a single object, a likelihood calculation function for calculating a likelihood of the target based on the distance measurement data constituting the single object grouped by the grouping function, or the result of the image recognition associated by the image recognition association function with the distance measurement data, a match ratio calculation function for calculating a match ratio of the target based on the result of the image recognition associated by the image recognition association function with the distance measurement data constituting the single object grouped by the grouping function, and a determination function for determining whether the single object grouped by the grouping function is the target based on the match ratio calculated by the match ratio calculation function, and the likelihood calculated by the likelihood calculation function.

Advantageous Effects of Invention

According to the object determination device and the object determination program, the image recognition results are associated (combined) with the distance measurement data, and the distance measurement data are grouped. Based on the grouped distance measurement data and the image recognition results associated with the distance measurement data, the likelihood that the object is the target, and the match ratio between the object and the target are calculated. Based on the likelihood and the match ratio, it is determined whether the object is the target. As the image recognition results and the distance measurement data are combined for determination of the object, high-speed and high-accuracy determination may be made.

A person is the target to be determined by the determination unit. Based on the determination results by the determination device, the grouped object is separated into the target (person) and others. As the position recognition unit recognizes the position of the object, the person is distinguished from the thing so that the corresponding position is recognized.

Brief Description of Drawings

Fig. 1 is a schematic view of an appearance of an object determination device.
Fig. 2 is a block diagram showing an electric structure of the object determination device.
Fig. 3(a) is a schematic view of an image recognition result table.
Fig. 3(b) is a schematic view of a distance measurement result table.
Fig. 3(c) is a schematic view of an object table.
Fig. 4 is a flowchart of main processing.
Fig. 5 is a flowchart of object recognition processing.
Fig. 6(a) is a schematic view of baselines on the image acquired from the camera.
Fig. 6(b) is a schematic view of scanning the detection window defined by the baseline.
Fig. 7 is a schematic view of an image acquired from the camera and image recognition scores.
Fig. 8(a) is a schematic view of a positional relationship among foot-side reference lines of the baselines.
Fig. 8(b) is a schematic view of grouped measured distance values.
Fig. 9(a) is a schematic view of an end-to-end distance and an integration distance of the object.
Fig. 9(b) shows a likelihood distribution with respect to the end-to-end distance of the object.
Fig. 9(c) shows a likelihood distribution with respect to the integration distance of the object.

Fig. 10 is a schematic view showing the image recognition scores to the measured distance values of the object.

Description of Embodiment

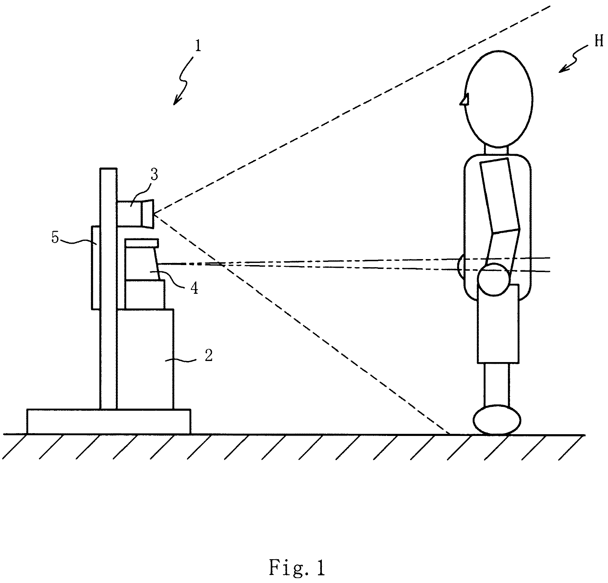

A preferred embodiment of the present invention will be described referring to the drawings. Referring to Fig. 1, an outline of an object determination device 1 will be described. Fig. 1 is a schematic view of an appearance of the object determination device 1. The object determination device 1 is configured to determine whether an object is a person (target) or a thing (other than the person) by combining an image recognition result of an object image acquired by a camera 3 with a measured distance value of the object (distance measurement data) acquired from a ranging sensor 4. The object determination device 1 includes a control unit 2 for controlling respective sections of the object determination device 1, the camera 3, the ranging sensor 4, and a display unit 5.

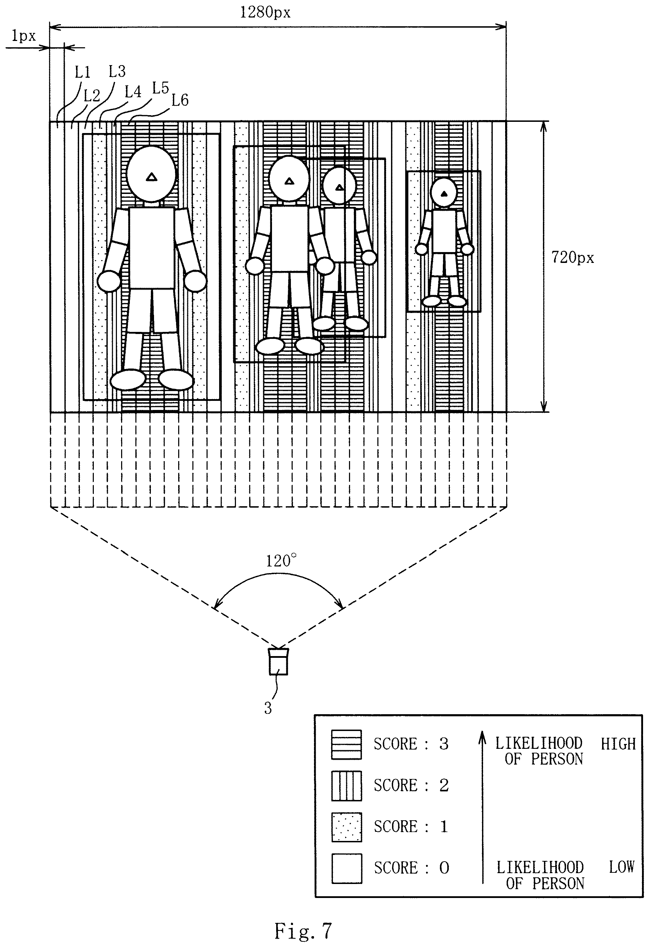

The camera 3 is a device for acquiring an image of peripheral environment of the object determination device 1. The camera 3 has its viewing angle set to 120°, providing the image with horizontal array of 1280 pixels (px) x vertical array of 720 pixels (see Fig. 7). The image acquired from the camera 3 is transmitted to the control unit 2.

The ranging sensor 4 disposed below the camera 3 irradiates laser beam omnidirectionally (360°) to measure the resultant scattered light so that the distance to the object existing in the peripheral environment of the object determination device 1 is detected. The ranging sensor 4 transmits the distance to the object detected at each angle of 0.25° in association with the angle to the control unit 2. The ranging sensor 4 is capable of detecting the object existing 100 m ahead. If no object exists in the peripheral environment, the value of 100 m indicating the distance detectable by the ranging sensor 4 is transmitted to the control unit 2. The distance to the object, and the corresponding angle acquired from the ranging sensor 4 will be denoted as "measured distance value (distance measurement data).

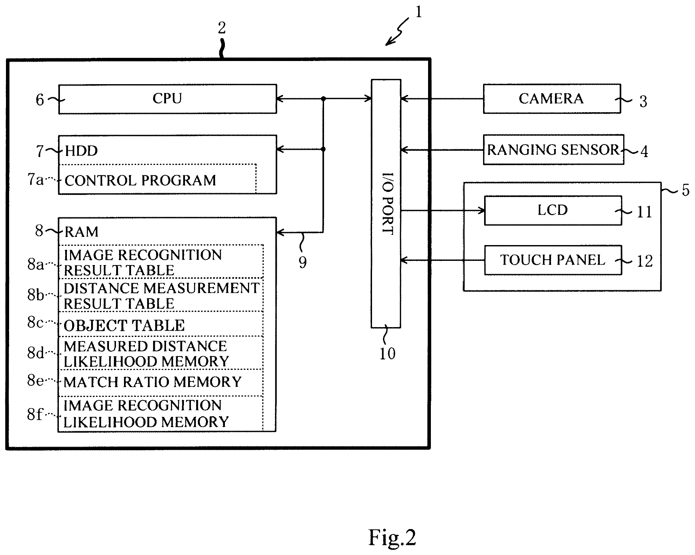

The display unit 5 is a device for displaying determination results whether the object is a person, and inputting a user's instruction to the object determination device 1, and constituted by an LCD 11 for displaying the recognition result whether the object is the person or the thing, and a touch panel 12 through which the user's instruction is input to the control unit 2 (see Fig. 2). The display unit is provided at the upper part of the object determination device 1.

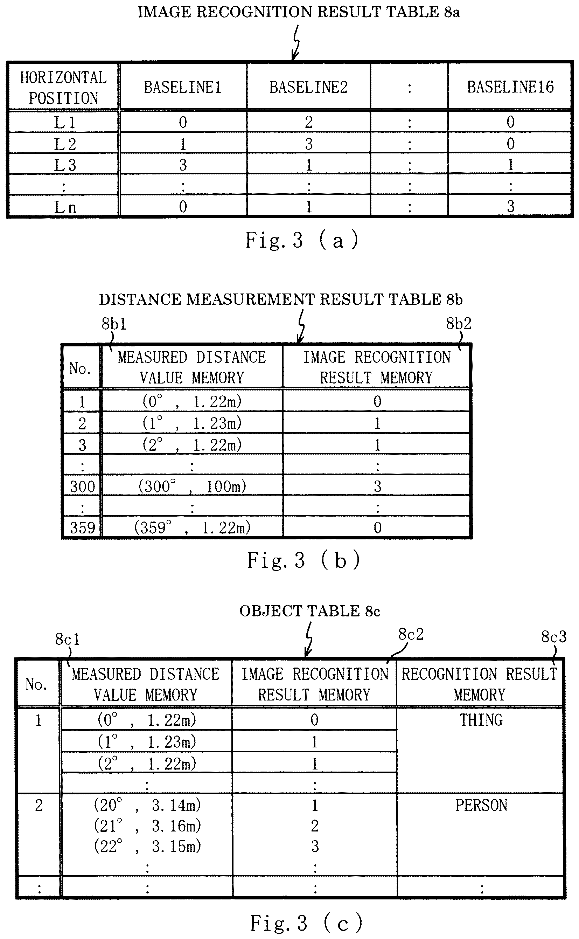

An electric structure of the object determination device 1 will be described referring to Fig. 2 and Figs. 3. Fig. 2 is a block diagram showing the electric structure of the object determination device 1. The control unit 2 includes a CPU 6, a hard disk drive (HDD) 7, and a RAM 7, all of which are connected to an I/O port 10 via a bus line 9. The I/O port 10 is connected to the camera 3, the ranging sensor 4, and the display unit 5, respectively.

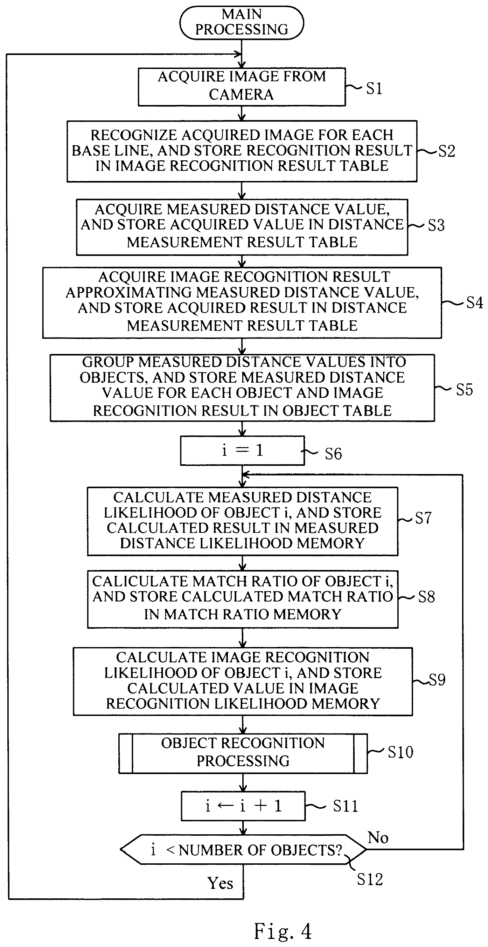

The CPU 6 is an arithmetic device for controlling the respective sections mutually connected with the bus line 9. A control program 6a is stored in the HDD 7 as a nonvolatile rewritable storage device for storing the program to be executed by the CPU 6 and data of fixed values. Upon execution of the control program 6a by the CPU 6, the main processing as shown in Fig. 4 starts.

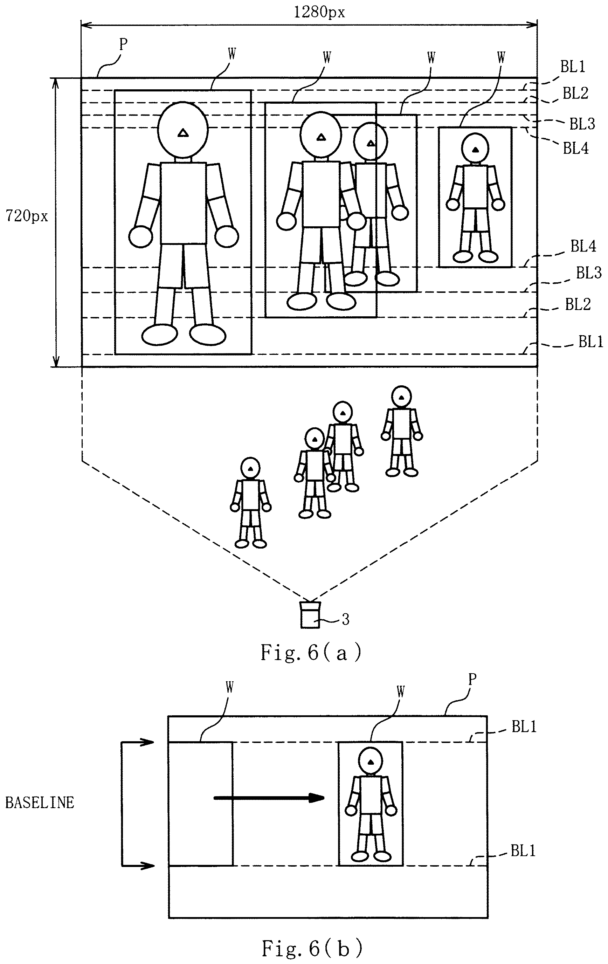

The RAM 8 is a memory for rewritably storing various work data and flags in execution of the control program 7a by the CPU 6, and includes an image recognition result table 8a, a distance measurement result table 8b, an object table 8c, a measured distance likelihood memory 8d, a match ratio memory 8e, and an image recognition likelihood memory 8f. The image recognition result table 8a is a data table for storing an image recognition score calculated from the image acquired from the camera 3 at each horizontal position and each baseline (see Fig. 6(a)). Referring to Fig. 3(a), the image recognition result table 8a will be described.

Fig. 3(a) is a schematic view of the image recognition result table 8a that stores a score (hereinafter referred to as "image recognition score") indicating likelihood of the person as a result of image recognition processing at horizontal positions L1 to L1280 (see Fig. 7) derived from dividing an image acquired from the camera 3 in the horizontal direction for each pixel, and baselines BL1 to BL16 (see Fig. 6(a)) each set as a pair of upper and lower lines in the horizontal direction of the image. The "baseline 1" shown in Fig. 3(a) corresponds to the baseline BL1 as shown in Fig. 7. The "baseline 2" corresponds to the baseline BL2, and the "baseline 16" corresponds to the baseline BL16. When the horizontal position that is not to be distinguished among the L1 to L1280 will be denoted as "horizontal position Ln". When the baseline that is not to be distinguished among the BL1 to BL16 will be denoted as "baseline BLm".

The image recognition score to be stored in the image recognition result table 8a includes "3", "2", "1", "0" in the order of higher likelihood of the person. The image recognition result table 8a stores the score based on the result of the image recognition for each baseline BLm of the image as described later referring to Fig. 7. Specifically, the image recognition result table stores "3" at the horizontal position Ln determined as having high likelihood of the person, "2" at the horizontal position Ln determined as having intermediate likelihood of the person, and "1" at the horizontal position Ln determined as having low likelihood of the person. The image recognition result table stores "0" at the horizontal position Ln determined that the object is not the person. The image recognition score includes four grades from 0 to 3. However, the score may include either more or less than four grades in a non-restricted manner.

Referring to Fig. 2, the distance measurement result table 8b is a data table that stores the measured distance value acquired from the ranging sensor 4, and the image recognition score corresponding to the measured distance value. Referring to Fig. 3(b), the distance measurement result table 8b will be described.

Fig. 3(b) is a schematic view of the distance measurement result table 8b. The distance measurement result table 8b stores a measured distance value memory 8b1 and an image recognition result memory 8b2, which are associated with each other. The measured distance value memory 8b1 stores the measured distance value acquired from the ranging sensor 4. As Fig. 3(b) shows, the measured distance value memory 8b1 stores the measured distance value in the form of (angle, distance). The image recognition score that approximates the measured distance value of the measured distance value memory 8b1 corresponding to the base line BLm and the horizontal position Ln of the image recognition result table 8a is acquired, and stored in the image recognition result memory 8b2.

Referring back to Fig. 2, the object table 8c as the data table stores the measured distance value and the image recognition score for each object that has been grouped based on the measured distance value in the measured distance value memory 8b1 of the distance measurement result table 8b, and the recognition (determination) result as to whether the object is the person or the thing. The object table 8c will be described referring to Fig. 3(c).

Fig. 3(c) is a schematic view of the object table 8c. The object table 8c stores a measured distance value memory 8c1, an image recognition result memory 8c2, and a recognition result memory 8c3, which are associated with one another for each of the grouped objects. The measured distance value memory 8c1 stores a measured distance value constituting the object acquired from the distance measurement result table 8b. The image recognition result memory 8c2 stores the image recognition score corresponding to the measured distance value in the measured distance value memory 8c1 acquired from the distance measurement result table 8b. The recognition result memory 8c3 stores object recognition results (the person or the thing).

Referring back to Fig. 2, the measured distance likelihood memory 8d stores a measured distance likelihood $\beta$ calculated from the distance between the measured distance values constituting the object, indicating likelihood of the person based on the object shape. The match ratio memory 8e stores a match ratio $\gamma$ calculated from the ratio between the measured distance value constituting the object and the measured distance value with the image recognition score equal to or higher than "1", based on which the object is determined as the person.

The image recognition likelihood memory 8f stores an image recognition likelihood (image likelihood) $\alpha$ indicating the likelihood that the object is the person, and the image recognition likelihood $\alpha$ is calculated by averaging the image recognition scores of the measured distance values each scored "1" or higher among those constituting the object, based on which the object is determined as the person.

The processing to be executed by the CPU 6 of the control unit 2 will be described referring to Fig. 4 to Fig. 10. The main processing is started immediately after power supply to the object determination device 1.

Fig. 4 is a flowchart of the main processing. In the main processing, an image is acquired from the camera 3 (S1). Subsequent to processing in S1, an image recognition processing is executed to the image acquired from the camera 3 at each baseline BLm, and a recognition result is stored in the image recognition result table 8a (S2). Processing to be executed in S2 will be described referring to Figs. 6 and Fig. 7.

Fig. 6(a) is a schematic view of the baselines BLm on the image acquired from the camera 3. Fig. 6(b) is a schematic view of scanning a detection window W defined by the baselines BLm. Fig. 7 is a schematic view of the image acquired from the camera 3, and the image recognition scores. In S2, baselines BL1 to BL16 are set with respect to the image acquired from the camera 3. The baseline BLm denotes a reference line indicating a reference position in the image, and is used for detecting the position of the object from the image, and calculating the image recognition score.

As Fig. 6(a) shows, the baseline BLm includes two reference lines, that is, the horizontal line (hereinafter referred to as "foot side reference line") at the lower side of the image, indicating the reference position of person/thing in the image relative to the camera 3, and the horizontal line (hereinafter referred to as "head side reference line") at the upper side of the image, indicating the position of the head top of the person located on the foot side reference line. The outermost pair of the reference lines of the image including the lowermost foot side reference line and the uppermost head side reference line is denoted as the baseline BL1. The pair of the foot side reference line and the head side reference line at the inner side of the baseline BL1 on the image is denoted as BL2. Likewise, the baselines BL3, BL4, ... BL16 are set (the baselines BL5 and those subsequent thereto will be omitted).

The position of the foot side reference line of the baseline BL1 is 10 m apart from the camera 3. The position of the foot side reference line of the baseline BL2 is 5 m apart from the baseline BL1. Likewise, each of the baselines BL3 to BL16 is 5 m apart from the baselines BL2 to BL15, respectively. The position of the head side reference line of the baseline BLm is set to the position corresponding to the height from the foot side reference line.

Although the number of the baseline BLm pairs is 16, the number of such pairs may be set either more or less than 16 in the non-restricted manner in accordance with processing speed of the object determination device 1. Although the foot side reference lines are set at each interval of 5 m in the image, it is possible to set the interval to be either more or less than 5 m in the image. Although the head side reference line is set at the height of 1.8 m from the corresponding foot side reference line, it is possible to set the head side reference line at the height either higher or shorter than 1.8 m.

In S2, the detection window W is formed having its height as the distance between the foot side reference line and the head side reference line of the base line BLm, and its width set to a fixed distance (for example, 0.6 m). The respective detection windows W are horizontally scanned along the baseline BLm (Fig. 6(b)). The image in the detection window W is subjected to the image recognition processing. The image recognition score for each pixel in the horizontal direction of the image is determined based on the result of the image recognition processing, and stored in a corresponding memory region of the image recognition result table 8a. A known process is suitably executed as the image recognition processing. For example, the image recognition score may be calculated by matching between feature description acquired from the detection window W such as CoHOG and MRCoHOG, and the leaning data preliminarily stored in the HDD 7.

The image recognition score to be stored in the image recognition result table 8a will be described referring to Fig. 7. The image recognition score is calculated at each horizontal position Ln corresponding to the position for each pixel in the horizontal direction of the image. The horizontal position Ln at which the image recognition score is determined as "3" is expressed with horizontal stripes. The horizontal position Ln at which the image recognition score is determined as "2" is expressed with vertical stripes. The horizontal position Ln at which the image recognition score is determined as "1" is expressed with dots. On the other hand, the horizontal position Ln at which the image recognition score is determined as "0" is not provided with the stripes nor the dots, indicating that the person does not exist. In Fig. 7, the width of the horizontal position Ln is enlarged for explanatory purpose. Actually, there are 1280 horizontal positions from L1 to L1280 each having its width corresponding to a pixel.

As Fig. 7 shows, the image recognition scores at the horizontal positions Ln, especially those with large amount of elements indicating features of the person such as face may be highly scored as "3" or "2". The image recognition scores at the horizontal positions Ln, especially those with small amount of elements indicating features of the person such as a part of hand may be scored as "1". Meanwhile, the image recognition score at the horizontal position Ln indicating no person may be scored as "0".

The image recognition processing is executed to the image in the detection window W set for each of the predetermined baselines BLm in the horizontal scanning of the detection window W. The obtained image recognition scores at the respective horizontal positions Ln are stored in the image recognition result table 8a. The image recognition score may be acquired without executing the complicated image recognition processing that requires the change in the size of the detection window W in accordance with the size of the person and the thing to be detected. Therefore, it is possible to reduce the load to the object determination device 1 in executing the processing. The head side reference line of the baseline BLm is set based on the position of the head top of the person located on the corresponding foot side reference line. It is therefore possible to prevent execution of unnecessary image recognition processing to the region higher than the head top of the person.

Referring back to Fig. 4, subsequent to processing in S2, the measured distance value is acquired from the ranging sensor 4, and stored in the measured distance value memory 8b1 of the distance measurement result table 8b (S3). Subsequent to processing in S3, the image recognition score that approximates the measured distance value stored in the measured distance value memory 8b1 of the distance measurement result table 8b is acquired from the image recognition result table 8a, and stored in the image recognition result memory 8b2 of the distance measurement result table 8b (S4). The measured distance values in the measured distance value memory 8b1 of the distance measurement result table 8b are grouped into objects. Values in the measured distance value memory 8b1 and the image recognition result memory 8b2 of the distance measurement result table 8b corresponding to the respective objects are stored in the object table 8c (S5).

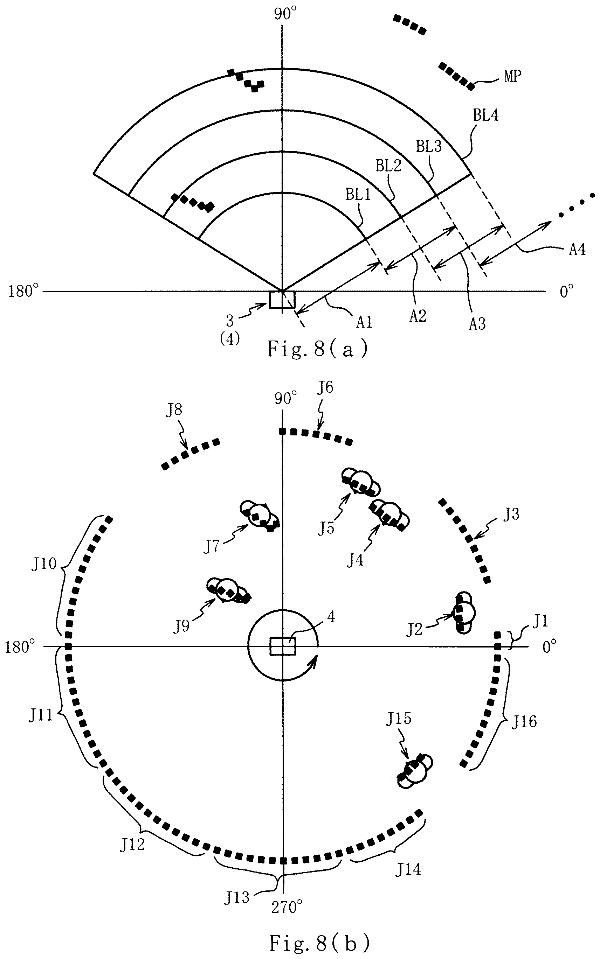

Referring to Fig. 7 and Figs. 8, the processing to be executed in S4 and S5 will be described. In S4, the horizontal position Ln is acquired, which approximates the angle corresponding to the measured distance value in the measured distance value memory 8b1 of the distance measurement result table 8b. The angle of the horizontal position Ln in the image will be described referring to Fig. 7.

As Fig. 7 shows, the number of horizontal pixels of the image is 1280, and a view angle of the camera 3 is 120°. The angle of the single horizontal position Ln is 0.0935° (=120°/1280 pixels). As the angle of the center position of the image is set to 90°, the angle of the horizontal position L1 is 150°, and the angle of the horizontal position L2 is 150.0935°. Based on the thus defined horizontal position Ln, the horizontal position Ln most approximating the angle corresponding to the measured distance value in the measured distance value memory 8b1 is acquired.

In processing in S4, the baseline BLm approximating the distance corresponding to the measured distance value in the measured distance value memory 8b1 of the distance measurement result table 8b is acquired. The processing for acquiring the baseline BLm will be described referring to Fig. 8(a).

Fig. 8(a) schematically shows a positional relationship among the foot side reference lines of the baselines BLm. A black square mark in the drawing denotes a measured distance value MP stored in the measured distance value memory 8b1 of the distance measurement result table 8b. As described above, the foot side reference lines of the baselines BLm are set each at a predetermined interval from the camera 3 in the image. Specifically, the foot side reference line of the baseline BL1 is set to the position 10 m apart from the camera 3. The foot side reference line of the baseline BL2 is set to the position 15 m apart from the camera 3. The image recognition score to be stored in the image recognition result table 8a is determined based on the position of the baseline BLm. Therefore, the image recognition score indicates the likelihood that the object existing around the baseline BLm is the person.

Regions A1 to A16 are set based on the baselines BLm. Specifically the region defined by the camera 3 and the baseline BL1 is set as a region A1 based on the baseline BL1, a region defined by the baselines BL1 and BL3 is set as a region A2 based on the baseline BL2. A region defined by the baselines BL14 and BL16 is set as a region A15 based on the baseline BL15, and a region from the baseline BL15 and further is set as a region A16 based on the baseline BL16 (the region A5 and those subsequent thereto are omitted in the drawing).

The regions A1 to A16 corresponding to distance values of the measured distance values in the measured distance value memory 8b1 of the distance measurement result table 8b are acquired. The baselines BLm corresponding to the acquired regions A1 to A16 are further acquired. The image recognition score is retrieved from the image recognition result table 8a using the acquired baseline BLm and the horizontal position Ln most approximating the angle corresponding to the previously acquired measured distance value in the measured distance value memory 8b1. The matched image recognition score is then stored in the image recognition result memory 8b2 of the distance measurement result table 8b. The processing as described above allows the image recognition score acquired from the camera 3 to be combined (associated) with the measured distance value acquired from the ranging sensor 4 as the device different from the camera 3.

Referring to Fig. 8(a), in each of the regions A2 to A16, the common region exists between the two adjacent regions from A2 to A16 (for example, the region defined by the baselines BL2 and BL3 overlapped in the regions A2 and A3). A certain distance corresponding to the measured distance value in the measured distance value memory 8b1 may correspond to two regions from A2 to A16. As a result, two image recognition scores may be acquired from the image recognition result table 8a. In this case, among the acquired image recognition scores, the higher image recognition score is stored in the image recognition result memory 8b2 of the distance measurement result table 8b. The image recognition score determined as highly likelihood of the person at the same horizontal position Ln and the corresponding baseline BLm may be stored in the image recognition result memory 8b2 of the distance measurement result table 8b.

Referring back to Fig. 4, subsequent to processing in S4, the measured distance values stored in the measured distance value memory 8b1 of the distance measurement result table 8b are grouped into objects each as a unit subjected to the processing to recognize whether the object is the person or the thing. The measured distance value and the image recognition result for each object are stored in the object table 8c (S5). Referring to Fig. 8(b), the grouping process will be described.

Fig. 8(b) is a schematic view of the process of grouping the measured distance values. As Fig. 8(b) shows, at the position where the object exists, each distance between adjacent measured distance values among those detected by the ranging sensor 4 is reduced. If the distance difference between the adjacent measured distance values is 0.1 m or shorter, it is determined that those values indicate the same object. Then the adjacent measured distance values are grouped into one object. If the measured distance values in which the difference between the adjacent measured distance values is 0.1 m or shorter indicating no existence of the object, for example, is detected successively 10 times, the section including those 10 measured distance values is grouped into another object.

Referring to Fig. 8(b), the series of measured distance values in which the distance difference between the adjacent measured distance values is 0.1 m or shorter are grouped into objects J2, J4, J5, J7, J9, J16, respectively. Meanwhile, the series of measured distance values indicating no existence of the object are grouped into objects J1, J3, J6, J8, J10 to J15, J17. In the range from the object J10 to J15, there are 10 or more consecutive measured distance values indicating no existence of the person and the like. Therefore, those measured distance values are grouped into one object for every 10 values. Accordingly, those values are grouped into the objects J10 to J15. The distance difference between the adjacent measured distance values is set to 0.1 m for grouping the corresponding measured distance values into the same object. However, the distance difference may be set to either longer or shorter than 0.1 m in the non-restricted manner. In the case of 10 consecutive values in which the distance difference between the adjacent measured distance values is 0.1 m or shorter, those 10 measured distance values are grouped into another object. However, the number of the consecutive measured distance values may be either more or less than 10 in the non-restricted manner.

The values constituting the grouped objects in the measured distance value memory 8b1 and in the image recognition result memory 8b2 of the distance measurement result table 8b are stored in the object table 8c for each object. In processing in S6 and subsequent steps, it is recognized (determined) whether each of the objects stored in the object table 8c is the person or the thing.

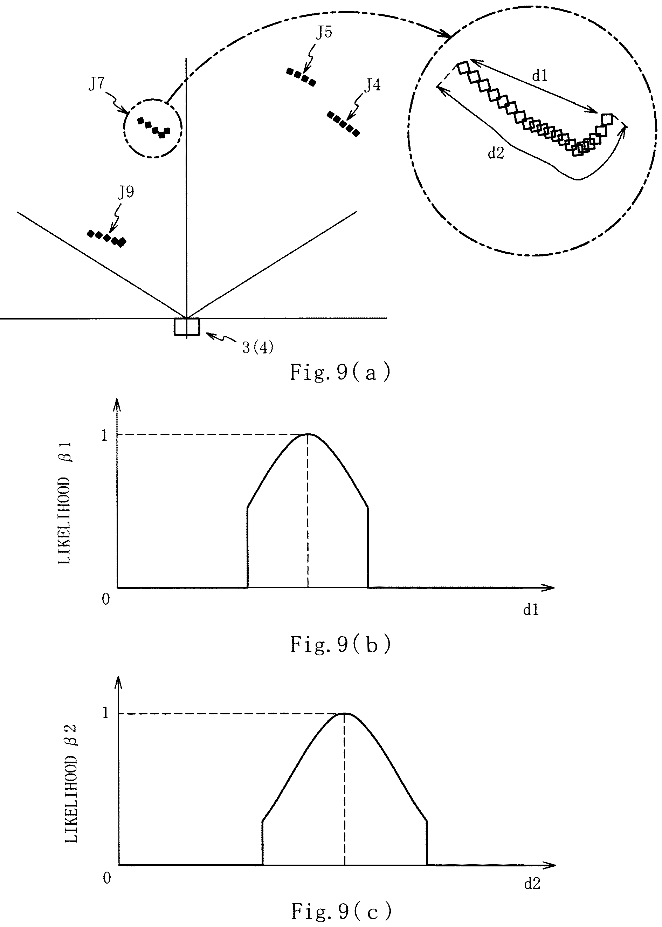

Referring back to Fig. 4, subsequent to processing in S6, a counter variable i is incremented by 1 (S6). In accordance with a shape of the i-th (No. i of Fig. 3(c)) object stored in the object table 8c, a measured distance likelihood $\beta$ indicating the likelihood of person is calculated, and stored in the measured distance likelihood memory 8d (S7). Referring to Figs. 9, the process for calculating the measured distance likelihood to be executed in S7 will be described.

Fig. 9(a) is a schematic view of an end-to-end distance d1 and an integration distance d2 of the object. Fig. 9(b) shows a likelihood distribution of the end-to-end distance d1 of the object. Fig. 9(c) shows a likelihood distribution of the integration distance d2 of the object. In S7, the measured distance values at both ends of the i-th object are acquired from values corresponding to the i-th object in the measured distance value memory 8c1 of the object table 8c. Then the distance between those two points, that is, the end-to-end distance d1 is calculated. All values of the distance between the adjacent measured distance values derived from values in the measured distance value memory 8c1 of the object table 8c are added to obtain the integration distance d2.

The likelihood $\beta1$ corresponding to the calculated end-to-end distance d1 is acquired from the likelihood distribution of the end-to-end distance d1 of the object as shown in Fig. 9(b). The likelihood $\beta2$ corresponding to the calculated integration distance d2 is acquired from the likelihood distribution of the integration distance d2 of the object as shown in Fig. 9(c). The measured distance likelihood $\beta$ is calculated by the following formula 1 using the likelihood values $\beta1$, $\beta2$.

[Formula 1]

$$\beta = \beta1 \cdot \beta2 \quad \cdot \ \cdot \ \cdot \ (\text{Formula1})$$

As Fig. 9(b), 9(c) and the formula 1 show, in the embodiment, the value of the measured distance likelihood $\beta$ becomes large so long as a specific relationship is established between the end-to-end distance d1 and the integration distance d2. The larger the value of the measured distance likelihood $\beta$ becomes, the higher the likelihood of person becomes. Normally, the torso part of the person is expressed as an ellipse. The specific relationship between combination of the large diameter of the ellipse (that is, end-to-end distance d1), and the circumference of the ellipse (that is, integration distance d2) and the likelihood of person has been established. The likelihood distribution indicating the likelihood of person corresponding to the end-to-end distance d1, and the likelihood distribution indicating the likelihood of person corresponding to the integration distance d2 are preliminarily set. Using the end-to-end distance d1 and the integration distance d2 calculated from the likelihood distributions and the object, the likelihood values $\beta1$ and $\beta2$ are acquired and multiplied. The measured distance likelihood $\beta$ indicating the likelihood of person based on the object shape may be calculated from the measured distance values constituting the object. The thus calculated measured distance likelihood β is stored in the measured distance likelihood memory 8d.

Referring back to Fig. 4, subsequent to processing in S7, the match ratio γ of the i-th object stored in the object table 8c is calculated, and stored in the match ratio memory 8e (S8). The match ratio γ denotes a value indicating a ratio of the measured distance values scored "1" or higher to the measured distance values constituting the object. Using the number Nh of measured distance values each having the image recognition score, that is, the value in the image recognition result memory 8c2 scored "1" or higher among those constituting the object, and the number Nlo of the measured distance values each having the value in the image recognition result memory 8c2 scored "0", the match ratio γ is calculated by the following formula 2.

[Formula 2]

$$\gamma = \frac{Nh}{Nh + Nlo} \quad \cdot \cdot \cdot (\text{Formula2})$$

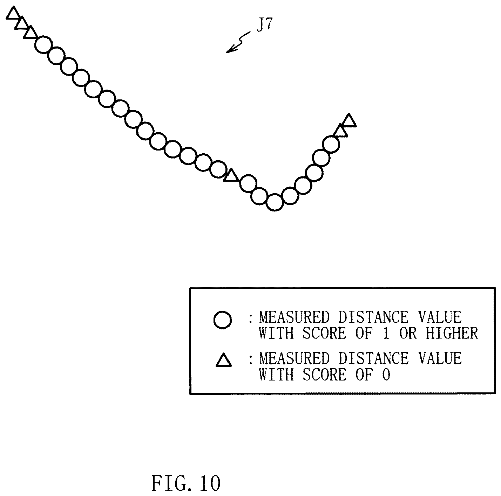

Referring to Fig. 10, the match ratio will be described. Fig. 10 is a schematic view of the image recognition scores corresponding to the measured distance values of the object J7 (Fig. 8(b)). The measured distance values with the image recognition scored "0" are shown by triangular marks, and the measured distance values with the image recognition scores of "1" or higher are shown by circular marks. As Fig. 10 shows, the both ends and a part of the object J7 have measured distance values with the image recognition scores of "0", and the rest of the part have measured distance values with the image recognition scores of "1" or higher. The number of the measured distance values each with the image recognition score of "0" is 6, and the number of the measured distance values each with the image recognition score of "1" or higher is 22. Therefore, the match ratio to the object J7 is "0.785". The object with high match ratio γ indicates a large number of measured distance values with the image recognition scores of "1" or higher. It is therefore determined that the object is highly likely to be a person.

Referring back to Fig. 4, subsequent to processing in S8, the image recognition likelihood α of the i-th object stored in the object table 8c is calculated, and stored in the image recognition likelihood memory 8f (S9). The image recognition likelihood α is calculated by averaging the image recognition scores in the image recognition result memory 8c2, corresponding to the measured distance values each scored "1" or higher among those constituting the object. Using the number Nh of the measured distance values scored "1" or higher in the image recognition result memory 8c2, and values Sk in the image recognition result memory 8c2 of the measured distance values scored "1" or higher, the image recognition likelihood α is calculated by the formula 3.

[Formula 3]

$$\alpha = \frac{\sum_{k=1}^{Nh} Sk}{Nh} \quad \cdot \cdot \cdot (\text{Formula3})$$

Specifically, in most cases, the object with high image recognition likelihood α has the measured distance value with the image recognition score of "2" or "3". It is therefore possible to determine that such object is highly likely to be the person.

Subsequent to processing in S9, the object recognition processing is executed in S10 to be described later. Then the counter variable i is incremented by 1 (S11). Subsequent to processing in S11, it is confirmed whether the counter variable i is larger than the number of objects stored in the object table 8c (S12).

In processing in S12, if the counter variable i is equal to or smaller than the number of objects stored in the object table 8c (S12: No), the object recognition processing is not executed to all the objects stored in the object table 8c in S10. The processing is then repeatedly executed in S7. Meanwhile, if the counter variable i is larger than the number of objects stored in the object table 8c (S12: Yes), the object recognition processing has been executed to all the objects stored in the object table 8c. The processing is then executed in S1 again.

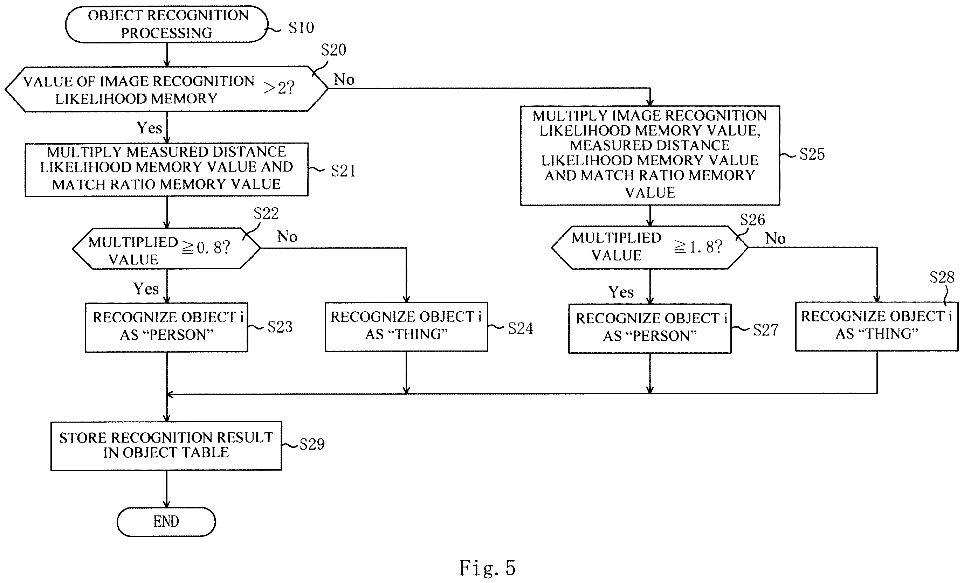

Referring to Fig. 5, the object recognition processing to be executed in S10 will be described. The object recognition processing is executed to recognize (determine) whether the corresponding object is the person or the thing based on the image recognition likelihood α, the measured distance likelihood β, and the match ratio γ, all of which are calculated in processing in S7 to S9.

Fig. 5 is a flowchart of the object recognition processing. The object recognition processing is executed to confirm whether the value in the image recognition likelihood memory 8f, that is, the image recognition likelihood α is larger than 2 (S20). In S20, if the value in the image recognition likelihood memory 8f is larger than 2 (S20: Yes), the value in the measured distance likelihood memory 8d and the value in the match ratio memory 8e are multiplied to obtain a multiplied value H (S21). That is, the multiplied value H is obtained by calculating the formula 4 using the measured distance likelihood β and the match ratio γ.

[Formula 4]

$$H = \beta \cdot \gamma \quad \cdot \cdot \cdot (\text{Formula4})$$

After processing in S21, it is confirmed whether the multiplied value H is equal to or larger than 0.8 (S22). If the multiplied value H is equal to or larger than 0.8 (S22: Yes), the i-th object is recognized as a "person" (S23). Meanwhile, if the multiplied value H is smaller than 0.8 (S22: Yes), the i-th object is recognized as a "thing" (S24).

Specifically, in S20, if it is determined that the value in the image recognition likelihood memory 8f is larger than 2, the i-th object has high image recognition likelihood $\alpha$, and is determined as being highly likely to be the person in the image recognition processing. In this embodiment, it is determined whether the object is the person or the thing using the multiplied value H of the measured distance likelihood $\beta$ and the match ratio $\gamma$. This makes it possible to determine whether the object is the person or the thing based on the object shape using the measured distance likelihood $\beta$ while considering the image recognition score of the object using the match ratio $\gamma$. The value to be compared with the multiplied value H is set to 0.8. However, the value may be either larger or smaller than 0.8 in the non-restricted manner.

In S20, if the value in the image recognition likelihood memory 8f is equal to or smaller than 2 (S20 : No), the value in the image recognition likelihood memory 8f, the value in the measured distance likelihood memory 8d, and the value in the match ratio memory 8e are multiplied to obtain the multiplied value H (S25). That is, the multiplied value H is calculated by the formula 5 using the image recognition likelihood $\alpha$, the measured distance likelihood $\beta$, and the match ratio $\gamma$.
[Formula 5]

$$H = \alpha \cdot \beta \cdot \gamma \quad \cdots \text{(Formula5)}$$

Subsequent to processing in S25, it is confirmed whether the multiplied value H is equal to or larger than 1.8 (S26). If the multiplied value H is equal to or larger than 1.8 (S26: Yes), the i-th object is recognized as being the "person" (S27). Meanwhile, if the multiplied value H is smaller than 1.8 (S26: Yes), the i-th object is recognized as being the "thing" (S28).

Specifically, the i-th object having the corresponding value in the image recognition likelihood memory 8f equal to or smaller than 2 as determined in S20 is determined as the object with low likelihood of person in the image recognition processing because of low image recognition likelihood $\alpha$. In such a case, it is recognized whether the object is the thing or the person using the multiplied value H of the image recognition likelihood $\alpha$, the measured distance likelihood $\beta$, and the match ratio $\gamma$. As a result, the multiplied value H contains the image recognition likelihood $\alpha$ in addition to the multiplied value H calculated in S21. It is possible to achieve further highly accurate recognition whether the object is the person or the thing. The value to be compared with the multiplied value H is set to 1.8. However, the value may be either larger or smaller than 1.8 in the non-restricted manner.

Subsequent to processing in S23, S24, S27, S28, the recognition results obtained in S23, S24, S27, S28 are stored in the recognition result memory 8c3 of the object table 8c (S29). Subsequent to processing in S29, the object recognition processing is terminated to return to the main processing as shown in Fig. 4.

Based on the values stored in the recognition result memory 8c3 of the object table 8c, the object determination device 1 recognizes whether the detected object is the person or the thing. That is, the position of the detected object is searched in reference to values in the measured distance value memory 8c1 of the object table 8c to obtain the value of the corresponding object in the recognition result memory 8c3 for recognition processing. As a result, the object is distinguished between the person and the thing to recognize the position of the object.

As described above, in the object determination device 1 according to the embodiment, the image recognition score of the image acquired from the camera 3 is calculated at each of the baselines BLm and each of the horizontal positions Ln. The calculated image recognition score is associated with the measured distance value acquired from the ranging sensor 4 so that the associated data are stored in the distance measurement result table 8b. The measured distance values stored in the distance measurement result table 8b are grouped to generate objects. The measured distance value and the image recognition score both corresponding to the object are stored in the object table 8c. Based on the measured distance likelihood $\beta$, the image recognition likelihood $\alpha$, and the match ratio $\gamma$, which are calculated from values in the object table 8c, it is determined whether the object is the person or the thing. As described above, the image recognition score to the image acquired from the camera 3 is combined with the measured distance value acquired from the ranging sensor 4 that is different from the camera 3. Based on the combined data, it is determined whether the object is the person or the thing. It is therefore possible to achieve the recognition processing with high speed and high accuracy.

The present invention has been described based on the embodiment. It is readily understandable that the present invention is not limited to the embodiment as described above, but may be variously modified within the scope of the present invention.

In the embodiment, the control program 7a is executed by the object determination device 1. However, it is not limited to the embodiment as described above. The control program 7a may be stored in a personal computer, a smartphone, a tablet terminal and the like so as to be executed. The object determination device 1 may be installed in the moving body configured to move autonomously while following up the user. The result of recognizing the object as the person or the thing determined by the object determination device 1 may be used for calculating the autonomous traveling route.

In the main processing of the above-described embodiment as shown in Fig. 4, the match ratio $\gamma$ is calculated by the formula 2. However, the match ratio $\gamma$ may be set to either 0 or 1 in accordance with the number of the measured distance values scored "1" or higher in the image recognition result memory 8c2. For example, if the number of the measured distance values scored "1" or higher in the image recognition result memory 8c2 occupies 70% of those of the object, the match ratio γ is set to 1. If the number of the measured distance values occupies less than 70%, the match ratio γ is set to 0.

In the main processing of the above-described embodiment as shown in Fig. 4, the likelihood values β1 and β2 corresponding to the end-to-end distance d1 and the integration distance d2, respectively are acquired from the likelihood distributions shown in Fig. 9(b) and Fig. 9(c). However, each of the likelihood values β1 and β2 may be set to 0 or 1 in accordance with values of the end-to-end distance d1 and the integration distance d2 in the non-restricted manner. If the end-to-end distance d1 is in the range from 0.4 m to 0.8 m, 1 is set to the likelihood β1, and 0 is set to the likelihood β1 otherwise. If the integration distance d2 is in the range from 0.6 m to 1.2 m, 1 is set to the likelihood β2, and 0 is set to the likelihood β2 otherwise.

In the object recognition processing (Fig. 5) of the embodiment, using the multiplied value H of the measured distance likelihood β and the match ratio γ, or the multiplied value H of the image recognition likelihood α, the measured distance likelihood β, the measured distance likelihood β, and the match ratio γ, it is recognized whether the object is the person or the thing. However, the object may be recognized as being either the person or the thing using the multiplied value H of the image recognition likelihood α and the match ratio γ in the non-restricted manner. In this case, the multiplied value H may be arbitrarily set for recognizing whether the object is either the person or the thing.

The multiplied value H may be calculated by preliminarily multiplying each of the image recognition likelihood α and the measured distance likelihood β by the weighting factor, respectively. In this case, the weighting factor may be the fixed value. Alternatively, the weighting factors for the image recognition likelihood α and the measured distance value β may be varied in accordance with the match ratio γ.

[Reference Signs List]

    1 object determination device
    3 camera (image pick-up unit)
    4 ranging sensor (distance measurement unit)
    7a control program (object determination program)
    8c object table (a part of position recognition unit)
    d1 end-to-end distance
    d2 integration distance
    S2 image recognition unit
    S4 image recognition association unit
    S5 grouping unit
    S7 a part of likelihood calculation unit, measured distance likelihood calculation unit
    S8 match ratio calculation unit

    S9 a part of likelihood calculation unit, image likelihood calculation unit
    S20 to S28 determination unit
    S29 a part of position recognition unit
    α image recognition likelihood (image likelihood)
    β measured distance likelihood
    γ match ratio

**Claims**

1. An object determination device (1) comprising:

   an image pick-up unit (3) for picking up an image;
   a distance measurement unit (4) for measuring a distance to an object;
   an image recognition unit (S2) for performing image recognition of the object in the image picked up by the image pick-up unit (3);
   an image recognition association unit (S4) for associating a result of the image recognition performed by the image recognition unit (S2) with distance measurement data measured by the distance measurement unit (4);
   a grouping unit (S5) for grouping a plurality of distance measurement data under a predetermined condition into a group of a single object;
   a likelihood calculation unit (S7, S9) for calculating a likelihood (α, β) of the target based on the distance measurement data constituting the single object grouped by the grouping unit (S5), or the result of the image recognition associated with the distance measurement data by the image recognition association unit (S4);
   a match ratio calculation unit (S8) for calculating a match ratio (γ) of the target based on the result of the image recognition associated by the image recognition association unit (S4) with the distance measurement data constituting the single object grouped by the grouping unit (S5); and
   a determination unit (S20 to S28) for determining whether the single object grouped by the grouping unit (S5) is the target based on the match ratio (γ) calculated by the match ratio calculation unit (S8), and the likelihood (α, β) calculated by the likelihood calculation unit (S7, S9).

2. The object determination device (1) according to claim 1, wherein:

   the likelihood calculation unit (S7, S9) includes a distance measurement likelihood calculation unit (S7) for calculating a distance measurement likelihood (β) of the target based on the distance measurement data constituting the single object grouped by the grouping unit (S5); and
   the determination unit (S20 to S28) determines whether the single object grouped by the grouping unit (S5) is the target based on the distance measurement likelihood ($\beta$) calculated by the distance measurement likelihood calculation unit (S7), and the match ratio ($\gamma$) calculated by the match ratio calculation unit (S8).

3. The object determination device (1) according to claim 2, wherein the distance measurement likelihood calculation unit (S7) calculates the distance measurement likelihood ($\beta$) of the target based on an end-to-end distance (d1) and an integration distance (d2) of the distance measurement data constituting the single object grouped by the grouping unit (S5) .

4. The object determination device (1) according to claim 2 or 3, wherein:

the likelihood calculation unit (S7, S9) includes an image likelihood calculation unit (S9) that calculates an image likelihood ($\alpha$) of the target based on the result of the image recognition associated by the image recognition association unit (S4) with the distance measurement data constituting the single object grouped by the grouping unit (S5); and
the determination unit (S20 to S28) determines whether the single object grouped by the grouping unit (S5) is the target based on the image likelihood ($\alpha$) calculated by the image likelihood calculation unit (S9), the distance measurement likelihood ($\beta$) calculated by the distance measurement likelihood calculation unit (S7), and the match ratio ($\gamma$) calculated by the match ratio calculation unit (S8) .

5. The object determination device (1) according to any one of claim 1 to claim 4, wherein when the likelihood ($\alpha, \beta$) calculated by the likelihood calculation unit (S7, S9) is equal to or larger than a predetermined threshold value, the determination unit (S20 to S28) determines that the single object grouped by the grouping unit (S5) is the target irrespective of the match ratio ($\gamma$) calculated by the match ratio calculation unit (S8).

6. The object determination device (1) according to any one of claim 1 to claim 5, wherein when adjacent distance measurement data among those measured by the distance measurement unit (4) are in a predetermined distance, the grouping unit (S5) groups the adjacent distance measurement data as the single object.

7. The object determination device (1) according to any one of claim 1 to claim 6, wherein when two or more results of the image recognition corresponding to the single distance measurement data exist, the image recognition association unit (S4) associates the distance measurement data with one of the results of the image recognition, which exhibits the highest image recognition degree as the target.

8. The object determination device (1) according to any one of claim 1 to claim 7, further comprising a position recognition unit (8c, S29) that separates the object grouped by the grouping unit (S5) into the target and others based on a determination result of the determination unit (S20 to S28), and recognizes a position of the object.

9. The object determination device (1) according to any one of claim 1 to claim 8, wherein a person is the target to be determined by the determination unit (S20 to S28).

10. An object determination program (7a) that allows a computer to execute:

an image acquisition function (S1) for acquiring an image;
a distance measurement data acquisition function (S3) for acquiring distance measurement data to an object;
an image recognition function (S2) for performing image recognition of the object in the image acquired by the image acquisition function (S1);
an image recognition association function (S4) for associating a result of the image recognition performed by the image recognition function (S2) with the distance measurement data acquired by the distance measurement data acquisition function (S3);
a grouping function (S5) for grouping a plurality of distance measurement data under a predetermined condition into a group as a single object;
a likelihood calculation function (S7, S9) for calculating a likelihood ($\alpha, \beta$) of the target based on the distance measurement data constituting the single object grouped by the grouping function (S5), or the result of the image recognition associated by the image recognition association function (S4) with the distance measurement data;
a match ratio calculation function (S8) for calculating a match ratio ($\gamma$) of the target based on the result of the image recognition associated by the image recognition association function (S4) with the distance measurement data constituting the single object grouped by the grouping function (S5); and
a determination function (S20 to S28) for determining whether the single object grouped by the grouping function (S5) is the target based on the match ratio ($\gamma$) calculated by the match ratio calculation function (S8), and the likelihood ($\alpha, \beta$)

calculated by the likelihood calculation function (S7, S9).

Fig. 1

Fig.2

IMAGE RECOGNITION RESULT TABLE 8a

| HORIZONTAL POSITION | BASELINE1 | BASELINE2 | : | BASELINE16 |
|---|---|---|---|---|
| L1 | 0 | 2 | : | 0 |
| L2 | 1 | 3 | : | 0 |
| L3 | 3 | 1 | : | 1 |
| : | : | : | : | : |
| Ln | 0 | 1 | : | 3 |

Fig. 3 (a)

DISTANCE MEASUREMENT RESULT TABLE 8b

8b1                                    8b2

| No. | MEASURED DISTANCE VALUE MEMORY | IMAGE RECOGNITION RESULT MEMORY |
|---|---|---|
| 1 | (0° , 1.22m) | 0 |
| 2 | (1° , 1.23m) | 1 |
| 3 | (2° , 1.22m) | 1 |
| : | : | : |
| 300 | (300° , 100m) | 3 |
| : | : | : |
| 359 | (359° , 1.22m) | 0 |

Fig. 3 (b)

OBJECT TABLE 8c

8c1                          8c2                    8c3

| No. | MEASURED DISTANCE VALUE MEMORY | IMAGE RECOGNITION RESULT MEMORY | RECOGNITION RESULT MEMORY |
|---|---|---|---|
| 1 | (0° , 1.22m) | 0 | THING |
| | (1° , 1.23m) | 1 | |
| | (2° , 1.22m) | 1 | |
| | : | : | |
| 2 | (20° , 3.14m) | 1 | PERSON |
| | (21° , 3.16m) | 2 | |
| | (22° , 3.15m) | 3 | |
| | : | : | |
| : | : | : | : |

Fig. 3 (c)

MAIN
PROCESSING

ACQUIRE IMAGE FROM
CAMERA ~S1

RECOGNIZE ACQUIRED IMAGE FOR EACH
BASE LINE, AND STORE RECOGNITION RESULT ~S2
IN IMAGE RECOGNITION RESULT TABLE

ACQUIRE MEASURED DISTANCE VALUE,
AND STORE ACQUIRED VALUE IN DISTANCE ~S3
MEASUREMENT RESULT TABLE

ACQUIRE IMAGE RECOGNITION RESULT
APPROXIMATING MEASURED DISTANCE VALUE,
AND STORE ACQUIRED RESULT IN DISTANCE ~S4
MEASUREMENT RESULT TABLE

GROUP MEASURED DISTANCE VALUES INTO
OBJECTS, AND STORE MEASURED DISTANCE
VALUE FOR EACH OBJECT AND IMAGE ~S5
RECOGNITION RESULT IN OBJECT TABLE

$i = 1$ ~S6

CALCULATE MEASURED DISTANCE
LIKELIHOOD OF OBJECT i, AND STORE ~S7
CALCULATED RESULT IN MEASURED
DISTANCE LIKELIHOOD MEMORY

CALICULATE MATCH RATIO OF OBJECT i,
AND STORE CALCULATED MATCH RATIO ~S8
IN MATCH RATIO MEMORY

CALCULATE IMAGE RECOGNITION
LIKELIHOOD OF OBJECT i, AND STORE ~S9
CALCULATED VALUE IN IMAGE
RECOGNITION LIKELIHOOD MEMORY

OBJECT RECOGNITION
PROCESSING ~S10

$i \leftarrow i + 1$ ~S11

$i <$ NUMBER OF OBJECTS? No
S12

Yes

Fig. 4

```
          ┌─────────────────────┐
          │ OBJECT RECOGNITION  │ ~ S10
          │     PROCESSING      │
          └─────────────────────┘
                     │
                     ▼                          S20
          ╱───────────────────────────╲    No
         ╱ VALUE OF IMAGE RECOGNITION   ╲─────────────────────┐
         ╲ LIKELIHOOD MEMORY      > 2?  ╱                      │
          ╲───────────────────────────╱                       │
                     │ Yes                                     ▼
                     ▼                          ┌─────────────────────────────┐
          ┌─────────────────────┐               │ MULTIPLY IMAGE RECOGNITION  │
          │ MULTIPLY MEASURED   │               │ LIKELIHOOD MEMORY VALUE,    │
          │ DISTANCE LIKELIHOOD │ ~ S21         │ MEASURED DISTANCE           │ ~ S25
          │ MEMORY VALUE AND    │               │ LIKELIHOOD MEMORY VALUE     │
          │ MATCH RATIO MEMORY  │               │ AND MATCH RATIO MEMORY      │
          │ VALUE               │               │ VALUE                       │
          └─────────────────────┘               └─────────────────────────────┘
                     │                                         │
                     ▼          S22                            ▼            S26
          ╱─────────────────╲  No               ╱─────────────────╲  No
         ╱ MULTIPLIED        ╲────────┐         ╱ MULTIPLIED        ╲────────┐
         ╲ VALUE      ≧ 0.8? ╱        │         ╲ VALUE      ≧ 1.8? ╱        │
          ╲─────────────────╱         │          ╲─────────────────╱         │ S28
                │ Yes                 │                │ Yes                 │
                ▼                     ▼                ▼                     ▼
      ┌──────────────────┐  ┌──────────────────┐  ┌──────────────────┐  ┌──────────────────┐
      │ RECOGNIZE OBJECT i│ │ RECOGNIZE OBJECT i│ │ RECOGNIZE OBJECT i│ │ RECOGNIZE OBJECT i│
      │ AS "PERSON"       │ │ AS "THING"        │ │ AS "PERSON"       │ │ AS "THING"        │
      └──────────────────┘  └──────────────────┘  └──────────────────┘  └──────────────────┘
          ~ S23                 ~ S24                 ~ S27
                │                    │                    │                    │
                ▼                    └────────────────────┴────────────────────┘
      ┌──────────────────┐                              │
      │ STORE RECOGNITION │ ~ S29  ◄──────────────────────
      │ RESULT IN OBJECT  │
      │ TABLE             │
      └──────────────────┘
                │
                ▼
          ┌─────────┐
          │   END   │
          └─────────┘
```

Fig. 5

Fig.6(a)

Fig.6(b)

Fig. 7

Fig.8(a)

Fig.8(b)

Fig.9(a)

Fig.9(b)

Fig.9(c)

J7

| | |
|---|---|
| O | : MEASURED DISTANCE VALUE WITH SCORE OF 1 OR HIGHER |
| △ | : MEASURED DISTANCE VALUE WITH SCORE OF 0 |

FIG. 10

## INTERNATIONAL SEARCH REPORT

International application No.

PCT/JP2018/010039

### A. CLASSIFICATION OF SUBJECT MATTER
Int.Cl. G06T7/00(2017.01)i, G01B11/00(2006.01)i

According to International Patent Classification (IPC) or to both national classification and IPC

### B. FIELDS SEARCHED

Minimum documentation searched (classification system followed by classification symbols)
Int.Cl. G06T7/00-7/90, G01B11/00

Documentation searched other than minimum documentation to the extent that such documents are included in the fields searched
| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2004-280451 A (MATSUSHITA ELECTRIC WORKS LTD.) 07 October 2004, paragraphs [0041]-[0076] & US 2006/0184274 A1, paragraphs [0054]-[0085] & DE 112004000438 T & TW 200508826 A & KR 10-2005-0108396 A | 1-10 |
| A | JP 2008-200770 A (TOSHIBA CORPORATION) 04 September 2008, paragraphs [0014]-[0034] & US 2008/0201014 A1, paragraphs [0029]-[0049] | 1-10 |
| A | JP 2009-176090 A (FUJI HEAVY IND LTD.) 06 August 2009, paragraphs [0078]-[0100] & US 2009/0190827 A1, paragraphs [0101]-[0123] | 1-10 |

☐ Further documents are listed in the continuation of Box C.     ☐ See patent family annex.

| | | |
|---|---|---|
| * | Special categories of cited documents: | |
| "A" | document defining the general state of the art which is not considered to be of particular relevance | "T" document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 25.05.2018 | 05.06.2018 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**EP 3 605 458 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009276200 A